Europäisches Patentamt

European Patent Office

Office européen des brevets

(11) Publication number: **0 405 786 A2**

# EUROPEAN PATENT APPLICATION

(21) Application number: 90306395.6

(22) Date of filing: 12.06.90

(51) Int. Cl.5: **C08F 4/42**, C08F 20/12

(30) Priority: 24.06.89 GB 8914577

(43) Date of publication of application:
02.01.91 Bulletin 91/01

(84) Designated Contracting States:
AT BE CH DE ES FR GB IT LI NL SE

(71) Applicant: IMPERIAL CHEMICAL INDUSTRIES PLC
Imperial Chemical House, Millbank
London SW1P 3JF(GB)

(72) Inventor: Ballard, Denis George Harold
The old Coach House, Tarvin Road
Chester CH6 7DD(GB)
Inventor: Runciman, Peter James Inglis
122 Dicksons Drive, Upton
Chester CH2 2BX(GB)
Inventor: Pickering, Anthony
76 Beechview Road, Kingsley
Cheshire(GB)

(74) Representative: Draggett, Peter Thornton et al
Imperial Chemical Industries PLC P.O. Box 6
Bessemer Road
Welwyn Garden City Herts AL7 1HD(GB)

(54) Catalysts.

(57) A process for the bulk addition polymerisation of acrylic monomer species to give a polymer, which process is carried out in an extruder and is catalysed by a catalyst comprising two components:

(a) an (initiator) first component of formula (I):

$M(X_m)(Y_n)Z_p$     (I)

wherein

M is Si, Ge or Sn

m and p are each an integer and n is 0 or an integer such that $(m + n + p) = 4$;

X is $QR^1R2^2$ where Q is N, P, As or $P(=T)G.D$

where T is O or S and G and D are each independently a bond, O or S and $R^1$ and $R^2$ are each independently optionally substituted hydrocarbyl or together are optionally substituted hydrocarbadiyl which are inert in the process conditions of the present invention, or, when Q is $P(=T)G.D$ as hereinbefore defined, $R^1$ and $R^2$ are each independently $M(Y_n)Z_p$ as hereinbefore defined.

Y is independently any group as defined for X, or any group selected from a group OA where A is optionally substituted hydrocarbyl inert in the process conditions of the present invention, or trialkylsilylalkyl;

Z is independently any group as defined for Y, or an organic polymer radical comprising further $M(Y_n)Z_p$ moieties; or

p is 2 and

$Z_2$ is a group $Z^1_2$ of the formula $OSiR^5R^6OSiR^7R^8O$-where $R^1$, $R^5$, $R^7$ and $R^8$ are each independently selected from any of the values defined for $R^1$ or $R^2$, or

$Z_2$ is a group $Z^2_2$ which is a moiety -EBE- where E is a bond or O and B is a polymer diradical, or E is O and B is an inorganic solid on whose surface the two -O- groups are located, which comprises further

$-OMX_mY_nO-$moieties; and

(b) a (co-catalyst) second component salt comprising an anion selected from azide, cyanide, cyanate, fluoride, bifluoride, nitrate and optionally substituted organic mono- and poly-phosphonates, phosphinates -sulphonates, -sulphinates, -carboxylates, -siloxides and -oxides; and

a cation which in use of the catalyst is inert under the polymerisation process conditions yet renders the co-catalyst available in the polymerising medium.

# CATALYSTS

This invention relates to a polymerisation process, in particular the addition polymerisation of acrylic monomers, using catalysts. (The terms 'polymerisation' and 'polymer', herein include a reference to homo- and co-polymerisation and -polymers respectively, and the term 'monomer' herein includes a reference to oligomers)

The addition polymerisation of vinylic monomer species, in particular such polymerisation of acrylic monomers, using a free-radical catalyst is well known.

However, the polymerisation of several known monomers (especially acrylics) tends to suffer from an excessive and not easily controllable reaction exotherm, so that well-controlled bulk polymerisation of such monomers has hitherto been difficult to achieve, and most such polymerisations have therefore disadvantageously had to be carried out in solution.

The bulk polymerisation of acrylics (in particular the free-radical polymerisation of methyl methacrylate) under adiabatic conditions typically results in polymers with a broad molecular weight distribution and a significant fraction of very high molecular weight material.

Extrusion bulk polymerisation of plastics using the direct injection of monomer and free radical generator is a convenient known plastics production process.

However, in the case of the adiabatic bulk polymerisation of acrylics (especially methyl methacrylate), the presence of the abovementioned high molecular weight material in the product reduces the realisable throughput rate of the extruder.

This reduction usually ocurs to an extent which renders the process impractical. Similarly, the extruder itself must be excessively and impractically long, conversions are low, and the overall process is excessively, and again impractically, slow. The method is unsuitable.

It would be desirable to be able to produce moderately high molecular weight polymers with a narrow molecular weight distribution by catalysed adiabatic bulk extrusion polymerisation in an extruder.

We have now found that it is possible to do so in an industrially feasible process, using certain catalysts.

Accordingly, the present invention in a first aspect provides a process for the bulk addition polymerisation of acrylic monomer species to give a polymer, which process is carried out at least in part in an extruder and is catalysed by a catalyst comprising two components:

(a) an (initiator) first component of formula (I):

$$M(X_m)(Y_n)Z_p \qquad (I)$$

wherein

M is Si, Ge or Sn

m and p are each an integer and n is 0 or an integer such that $(m + n + p) = 4$;

X is $QR^1R2^2$ where Q is N, P, As or $P(=T)G.D$

where T is O or S and G and D are each independently a bond, O or S and $R^1$ and $R^2$ are each independently optionally substituted hydrocarbyl or together are optionally substituted hydrocarbadiyl which are inert in the process conditions of the present invention, or, when Q is $P(=T)G.D$ as hereinbefore defined, $R^1$ and $R^2$ are each independently $M(Y_n)Z_p$ as hereinbefore defined.

Y is independently any group as defined for X, or any group selected from a group OA where A is optionally substituted hydrocarbyl inert in the process conditions of the present invention, or trialkylsilylalkyl;

Z is independently any group as defined for Y, or an organic polymer radical comprising further $M(Y_n) Z_p$ moieties; or

p is 2 and

$Z_2$ is a group $Z^1_2$ of the formula $OSiR^5R^6OSiR^7R^8O$-where $R^5$, $R^6$, $R^7$ and $R^8$ are each independently selected from any of the values defined for $R^1$ or $R^2$, or

$Z_2$ is a group $Z^2 2$ which is a moiety -EBE- where E is a bond or O and B is a polymer diradical, or E is O and B is an inorganic solid on whose surface the two -O- groups are located, which comprises further $-OMX_mY_nO$-moieties; and

(b) a (co-catalyst) second component salt comprising an anion selected from azide, cyanide, cyanate, fluoride, bifluoride, nitrate and optionally substituted organic mono- and poly-phosphonates, - phosphinates -sulphonates, -sulphinates, -carboxylates, -siloxides and -oxides; and

a cation which in use of the catalyst is inert under the polymerisation process conditions yet renders the co-catalyst available in the polymerising medium.

The anions from which the anion of component b) is selected include aliphatic and aromatic anions of the above organic types, optionally substituted by electron withdrawers, such as cyano, halo including fluoro and chloro, and nitro in aromatic moieties.

The cation may render the catalyst available inter alia by rendering it soluble in a monomer species to an extent which renders its use practicable.

The initiator component a) of the catalysts of the present invention may be used as such, or may be formulated into compositions with other materials, for example such conventional materials as catalyst supports.

The process of the present invention will now be described in greater detail, both generally and with reference to a specific embodiment thereof depicted schematically below.

The catalysts and compositions of the extrusion process of the present invention are used in conventional manner in such a process.

## Schematic of the Process

```
     initiator            monomer            co-catalyst
        ┌─────────────────────┤                    │
        │                purification              │
        │                    unit                  │
        └─────────────────────┐                    │
                              ├────────────────────┘
                              │
                          optional
                       prepolymerisation
                            unit
                              ├────────────────────┐
                              │
                        polymerisation
                          extruder
                              │
                      devolatilisation _____
                          extruder              │
                              │                 │
                           polymer           monomer
                           product           recovery
```

In the process of the first aspect of the invention, it is desirable that the reagent monomer should be as free from impurity as possible, that the process of the present invention should be conducted under anhydrous conditions, and that the water content of the monomers, polymerization initiators and co-catalysts any solvents is minimised in order to obtain relatively high molecular weight polymers by the present process.

The presence of significant amounts of water will tend to destroy the initiator, especially at the elevated temperatures of any substantially adiabatic phase of the process. Moreover, even concentrations significantly less than that of the initiator prolong the induction period of the reaction undesirably. Accordingly, (as in the Schematic) the monomer is often purified before use by distillation, followed by drying by passage through two drying columns each containing a dessicant, such as basic activated alumina Grade B and Zeolite 4A molecular sieves.

The process may be carried out using a number of different embodiments of the catalysts . Thus, for example, both the initiator component a) and the co-catalyst component b) may be soluble in a monomer to be polymerised and/or in a reaction vehicle. In a second embodiment the initiator a) may be in an insoluble form, such as one of those initiators which comprises an insoluble organic polymer or inorganic moiety, eg where in formula (I), p is 2 and $Z_2$ is a group -EBE- as hereinbefore defined; or the initiator may be comprised in an insoluble composition such as a conventional insoluble catalyst support. All such insoluble forms are described hereinafter.

Under the polymerisation process conditions the co-catalyst b) must be available to effect polymerisation in the polymerisation medium and this often means it must be soluble in at least one liquid monomer species, and/or in a phase which contains at least one monomer species, to such an extent that it can catalyse the reaction adequately. Thus, if the co-catalyst is not soluble in a monomer, an inert solvent compatible with the monomer(s) may be used, but just in sufficient quantities to dissolve the co-catalyst.

Examples of suitable inert solvents or vehicles (if desired) include ether solvents such as diethyl ether, dimethoxyethane, diethoxyethane, diethyleneglycol dimethyl ether or tetrahydrofuran; and hydrocarbon solvents such as benzene, toluene or xylene. The hydrocarbon series of solvents are preferred amongst such solvents.

In general such liquids should not contain labile hydrogen or halogen atoms or activated alkenyl groups.

The initiator which forms component a) is generally used in an amount corresponding to a molar ratio of 1:10 and generally less, and preferably 1:1000 to 1:50 relative to the monomer(s) except where the initiator comprises an insoluble polymeric or inorganic solid (ie in formula (I) $Z_2$ is-EBE- where E is a bond or 0 and B is polymer diradical or E is 0 and B is an inorganic solid as hereinbefore defined), when the initiator is generally used in an amount corresponding to a molar ratio of 1:100 to 1:5 relative to the monomer(s).

As noted hereinbefore, the ratio of initiator a) to co-catalyst b) is generally in the molar ratio range of 300:1 to 3:1, more often 100:1 to 8:1.

That is, the co-catalyst is generally used at a molar ratio to monomer of 1:300,000 to 1:400. The ratio of initiator to co-catalyst is given hereinbefore.

No particular restrictions are placed on the order in which the polymerization initiator, a) or a composition comprising it, co-catalyst b) and monomer are added to the reaction system in the process of the present invention and polymerization will proceed whatever sequence is used. For example, the catalyst components may be mixed and added to the monomer.

However, in terms of being able to control the bulk extrusion polymerisation of acrylics easily, it is desirable to add the initiator a) or composition comprising it and co-catalyst b) separately to the monomer or monomer mixture in either order, or to add one catalyst component to the monomer or monomer mixture or vice versa and add the product mixture to the other catalyst component.

Thus, where the initiator and co-catalyst are both soluble and to be used in a solvent in which the monomer or monomer mixture is also mutually soluble, it is often desirable to add the initiator and co-catalyst b) separately to the mon-mer or monomer mixture. Initiator a) or co-catalyst b) added to the reaction mixture should normally be added neat, or in the form of a solution or slurry in tetrahydrofuran or other organic solvent. Often the initiator is added first to the monomer or monomer mixture. Similarly where the initiator a) or its composition is insoluble, it is often desired to add the co-catalyst b) to the monomer or monomer mixture and to contact the product mixture with the initiator a) or its composition.

As shown in the Schematic it is often convenient to add the initiator to the monomer or monomer mixture, and then to add the co-catalyst to the product mix.

The initial part of the polymerisation may be relatively slow, and in the specific embodiment, if necessary in order to limit the effects of such slowness, the first stage is conveniently carried out in a prepolymerisation unit with turbulent flow of the liquid reaction mass under essentially isothermal conditions. The turbulent flow serves to ensure good mixing of the reaction mass, which also ensures good heat transfer to the walls of the unit to favour isothermal conditions.

The unit is conveniently a tube with internal baffles arranged in two opposed interprojecting series such that the flow of the reaction mass pumped down the tube is serpentine.

Acrylic monomer, preferably purifed and dried as described hereinbefore is typically fed continuously or semicontinuously (batchwise) into a tubular prepolymerisation unit of the type described hereinbefore.

The rate at which it is necessary to add initiator solution or slurry to the reaction mass to produce a product of a desired number average molecular weight may be determined by routine trial, and the initiator feeding means eg a pump may be set to supply initiator to the prepolymerisation unit input at that rate.

Similarly, the rate at which it may be necessary to add co-catalyst solution or slurry to produce a satisfactory polymerisation conversion rate in the prepolymerisation product syrup may be determined by routine trial, and the co-catalyst feed means eg a pump may be set to supply co-catalyst to the prepolymerisation unit input at that rate.

Temperature indicators along the tube may be used to give inferential polymer conversion percentages.

In the specific embodiment, the output of the prepolymerisation unit typically comprises 15 to 35 weight % polymer, more typically 20 to 30% as a syrup solution in monomer.

In the specific embodiment where a prepolymerisation unit is used, the prepolymerisation product syrup is then passed continuously or semi-continuously (batchwise) to a polymerisation extruder.

The prepolymerisation unit is of course optional, and if it is omitted, monomer, initiator and co-catalyst will be fed directly to the extruder as described for the same feeds into the prepolymerisation unit.

Where a prepolymerisation unit is used, further co-catalyst may advantageously be introduced into the reaction mass at this stage to optimise the overall polymerisation conversion rate.

Again, the rate at which it may be necessary to add co-catalyst solution or slurry to optimise the polymerisation conversion rate in the extruder may be determined by routine trial, and the co-catalyst feed pump may be set to supply co-catalyst to the extruder input at that rate.

In any event, the extruder will often be a twin-screw extruder in which the screws are positioned to clean the walls of the extruder barrel of reaction mass continually during operation.

This stage of the polymerisation is essentially or in large part adiabatic, since the strong reaction exotherm generates heat too rapidly to allow external cooling.

Where a prepolymerisation unit is used, the flow from that unit into the extruder is accordingly adjusted so that the second rapid phase of the reaction starts as nearly as possible on entry into the extruder.

Typically, in the latter case, 50 to 80% of the monomer in the extruder feedstock will be converted to polymer within 2 minutes.

It will be appreciated by the skilled man that in these conditions the reaction mass will increase rapidly in temperature and viscosity in the extruder, that the extruder must be capable of moving the mass under these conditions, and what the design of the extruder must be in order to achieve the latter.

The extruder screw speed is often adjusted by routine trial to give minimum hold-up.

In any version of the specific embodiment, the output of the polymerisation unit typically comprises 70 to 95 weight % polymer, more typically 75 to 90 weight % polymer.

The polymerization reaction of this invention will generally be conducted at a range of temperatures as the reaction mass passes through the extruder and as the conditions vary from isothermal to adiabatic, as further described hereinbefore. It may be conducted, for example, at temperatures ranging from $0\,^\circ C$ to $250\,^\circ C$; a range of 20 to $180\,^\circ C$ is preferable, or 100 to $180\,^\circ C$ in the case of any substantially adiabatic phase of the bulk polymerization, as further described hereinbefore (which is generally the significant stage of the process). To achieve conversions significantly in excess of 50% typically requires that the reacting solution of prcduct polymer in reacting monomer or monomer mixture achieves and continues to polymerise at temperatures above $150\,^\circ C$.

This latter requires initiators which are sufficiently stable to polymerise at such temperatures. The present initiators a) advantageously have the required stability. (This does not mean that the initiator is totally thermally stable, but that the reaction rate surprisingly exceeds the decomposition rate to a practically useful extent.)

The present process may be conducted under 1 to 50 atmospheres pressure. Normally any pressure conventionally placed on the reaction mass by the extruder operating at normal ambient atmospheric pressure is suitable.

It is thus also desirable but not essential to ensure that the process of the present invention is generally conducted in atmospheres that have been dried in order to prevent the penetration of any water. Such atmospheres would include dry air, or atmospheres of dried inert gases such as nitrogen or argon; dried inert gas atmospheres are preferable.

As shown in the Schematic, the reaction product is desirably post-treated. Thus, in the case of volatile monomers, the output from the extruder is typically fed into a second, devolatilisation extruder, Where the temperature of the polymer is raised under the application of reduced pressure. Reaction and post-treatment may also be carried out in a single extruder with a similar pressure and temperature profile along the extruder path. In either case, unreacted monomer (and other volatiles such as any low oligomer) given off under the post-treatment conditions may be conventionally collected and recycled to the purification stage, the prepolymerisation unit and/or the polymerisation extruder input. In excess of 99.9% pure polymer may be obtained in this way.

Finally, the end extrudate may be conventionally fed through a die and the product lace may be cooled in water and chopped for moulding compound, or the melt may be fed into a continuous slit die for sheet.

Any acrylic monomer in which the olefinic moiety is not substituted by any functional group possessing acidic hydrogen atoms may be polymerised in the present process.

Typical examples of acrylic monomers without such functional groups include:

methacrylic acid esters such as methyl methacrylate, ethyl methacrylate, propyl methacrylate, butyl methacrylate, 2-ethylhexyl methacrylate, lauryl methacrylate, and tricyclo[5,2,1,0$^{2'6}$]dec-3-en-8-yl methacrylate;

polyunsaturated methacrylic acid esters such as glycidyl methacrylate, triethyleneglycol dimethacrylate and allyl methacrylate;

acrylic acid esters such as methyl acrylate, ethyl acrylate, isopropyl acrylate, n-butyl acrylate, sec-butyl acrylate, tert-butyl acrylate and cyclohexyl acrylate;

unsaturated nitriles such as methacrylonitrile and acrylonitrile; and

N,N-dialkyl unsaturated amides such as N,N-dimethylacrylamide;

Preferred amongst these monomers are methyl methacrylate, lauryl methacrylate, butyl methacrylate, 2-ethylhexyl methacrylate and tricyclo[5,2,1,0$^{2'6}$]dec-3-en-8-yl methacrylate, acrylonitrile, methyl acrylate, butyl acrylate, methacrylonitrile, in particular methyl methacrylate, lauryl methacrylate, 2-ethylhexyl methacrylate, tricyclo[5,2,1,0$^{2'6}$]dec -3-en-8-yl methacrylate, butyl acrylate and methacrylate and acrylonitrile.

Methyl methacrylate is especially preferred.

These monomers may be used singly or in combination.

The product polymer of the process of the present invention preferably has a number average molecular weight in the range of 25,000 to 400,000, eg 50,000 to 200,000.

In the (initiator) first component a) of the catalyst:

Favoured M is Si.

The term 'optionally substituted' herein in relation to X, Y and Z groups includes substitution by pendent mono-or di-valent groups, and, in relation to X only, includes substitution by hetero-atoms.

It will be appreciated that, although bonds between M and at least one of X, Y or Z break in the catalytic process of the present invention, the groups themselves should be inert in the process conditions.

For this reason such groups, even when described as optionally substituted, are often unsubstituted by pendent monovalent substituents.

Unsubstituted hydrocarbyl and hydrocarbadiyl groups, including all such R$^1$ and R$^2$ groups, and the latter substituted by hetero-atoms, will all tend to be inert in the conditions of the process of the present invention.

Such groups which are substituted and also inert in the conditions of the process of the present invention also include such groups substituted by electron donors such as amino substituted by aliphatic substituents, such as alkyl, cycloalkyl and alkoxy. Such groups, even when described as optionally substituted are often unsubstituted by pendent monovalent substituents.

Within X (ie QR$^1$R$^2$ as hereinbefore defined), Q is often N, P, P$=$O or O-P($=$O)-O, in particular N and P.

Suitable R$^1$ and R$^2$ optionally substituted hydrocarbyl include optionally substituted alkyl and cycloalkyl (including polycycloalkyl).

Suitable R$^1$ and R$^2$ optionally substituted hydrocarbyl also include optionally substituted alkenyl and cycloalkenyl.

Suitable R$^1$ and R$^2$ optionally substituted hydrocarbyl further include optionally substituted aryl, aralkyl and aralkenyl.

Suitable R$^1$ and R$^2$ optionally substituted alkyl and such alkyl as a component within R$^1$ or R$^2$ include optionally substituted C$_{1-4}$ alkyl, in particular methyl. Such alkyl groups are often unsubstituted.

When X is N or P, such R$^1$ and R$^2$ groups include optionally substituted oxo-substituted alkyl, i.e. optionally substituted carboxylic acyl, for example such C$_{1-4}$ alkanoyl, in particular acetyl.

Suitable R$^1$ and R$^2$ optionally substituted cycloalkyl include such C$_{5-8}$ cycloalkyl, for example cyclohexyl, and polycycloalkyl. Such cycloalkyl groups are often unsubstituted.

Suitable R$^1$ and R$^2$ optionally substituted alkenyl and such alkenyl as a component within R$^1$ and R$^2$ include optionally substituted C$_{2-4}$ alkenyl, in particular methylprop-1-enyl (methallyl).

Suitable R$^1$ and R$^2$ optionally substituted cycloalkenyl include such C$_{5-8}$ cycloalkenyl, for example cyclohex-1-enyl, especially when Q is N. Such cycloalkenyl groups are often unsubstituted.

Suitable R$^1$ and R$^2$ optionally substituted aryl and such aryl as a component within R$^1$ and R$^2$ include phenyl optionally substituted by substituents inert in the desired polymerisation conditions.

Such substituents include alkyl and aryl. Such aryl groups are however often unsubstituted.

Suitable R$^1$ and R$^2$ optionally substituted aralkyl groups include the above suitable alkyl groups substituted by the above suitable aryl groups, and thus include benzyl optionally substituted in the phenyl ring, but more often unsubstituted benzyl.

Suitable R$^1$ and R$^2$ optionally substituted aralkenyl include the above suitable alkenyl groups substituted by the above suitable aryl groups, and thus include 2-methyl-1-phenylprop-1-enyl (phenylmethallyl) optionally substituted in the phenyl ring, but more often unsubstituted 2-methyl-1-phenylprop-1-enyl.

When Q is N, $R^1$ and $R^2$ are favourably together optionally substituted hydrocarbadiyl.

In one preferred group, such $(R^1 + R^2)$ are unsubstituted by hetero-atoms.

In a second preferred group, such $(R^1 + R^2)$ are substituted by hetero-atoms other than nitrogen.

In a third preferred group, such $(R^1 + R^2)$ are unsubstituted by pendent monovalent substituents.

In a fourth preferred group, such $(R^1 + R^1)$ have an $\alpha$ saturated carbon atom substituted by an oxo group.

For all values of Q :

Suitable $(R^1 + R^2)$ optionally substituted hydrocarbadiyl exclude 1,2-diyl, but include optionally substituted alkanediyl, cycloalkanediyl (including polycycloalkanediyl), alkenediyl, alkapolyenediyl, cycloalkenediyl, arylene and diradical combinations of such diradicals such as arylenealkyl, arylenealkenyl and arylenecycloalkyl.

Suitable $(R^1 + R^2)$ optionally substituted alkanediyl include $\alpha,\omega\text{-}C_{3-6}$ alkanediyl optionally substituted by at least one hetero-atom or -group.

Such atoms and groups include O, S or $NR^3$ where $R^3$ is independently any of the values of $R^1$, or independently another group $M(Y_n)Z_p$ as hereinbefore defined.

Corresponding $QR^1R^2$ groups thus include 4- to 7-member heterocyclyl groups, such as pyrrolidino, piperidino and morpholino, and $N'\text{-}C_{1-4}$ alkylpiperazino, and phospha-analogues thereof, in particular morpholino. Such groups are often not further substituted.

When X is N, such $(R^1 + R^2)$ groups include similarly optionally hetero-substituted, $\alpha$-oxo-substituted alkanediyl, i.e. $QR^1R^2$ may be a 4- to 7-member lactamido group such as 1-oxazolidonyl and N-piperidonyl. Such groups are often not further substituted by pendent substituents.

Suitable $(R^1 + R^2)$ optionally substituted alkenediyl and alkapolyenediyl include $\alpha,\omega\text{-}C_{4-6}$ alkenediyl, $\alpha,\omega\text{-}C_{4-6}$ alkanedienediyl and $\alpha,\omega$-hexatrienediyl optionally substituted by at least one hetero-atom or group, such as O or S, or $NR^3$ where $R^3$ is independently any of the values of $R^1$.

Corresponding $QR^1R^2$ groups thus include 5- to 7-member unsaturated heterocyclyl groups such as 1-pyrryl, pyrrolinyl, imidazolyl and imidazolinyl, in particular imidazolyl. Such groups are often not further substituted.

$R^1$ and $R^2$ may each be alkylene- or arylenecarbonyl in a polyamide chain bearing other $M(Y_n)Z_p$ groups.

Suitable $(R^1 + R^2)$ optionally substituted arylene groups include biphenyl-2,2'-diyl optionally substituted as for $R^1$ and $R^2$ aryl.

Corresponding $QR^1R^2$ groups thus include 9-carbazolyl and its phospha analogue.

Such groups may be substituted in the aryl moiety by alkyl but are often unsubstituted.

Suitable $(R^1 + R^2)$ optionally substituted arylenealkyl groups include groups composed of a 1,2-arylene moiety and an $\alpha,\omega\text{-}C_{2-4}$ alkanediyl, which latter may be $\alpha$-oxo-substituted.

Corresponding $QR^1R^2$ groups thus include benzo-fused 5 to 7 member saturated heterocyclyl groups such as N-indanyl and N-indan- 2-onyl and their phospha analogues. Such groups may be substituted in the aryl moiety by alkyl but are often unsubstituted.

Suitable $(R^1 + R^2)$ optionally substituted arylenealkenyl groups include groups composed of a 1,2-arylene moiety and an $\alpha,\omega$ $C_{2-4}$ alkenediyl.

Corresponding $QR_1R_2$ groups thus include benzo-fused 5- to 7-member unsaturated heterocyclyl groups such as N-indolyl and its phospha analogue. Such groups may be substituted in the aryl moiety by alkyl but are often unsubstituted.

Suitable $(R^1 + R^2)$ optionally substituted arylenecycloalkyl groups include groups composed of a 1,2-arylene moiety and 1',2'-$C_{5-7}$ cycloalkanediyl moiety.

Corresponding $QR^1R^2$ groups thus include 1,2,3,4-tetrahydro-9-carbazolyl and its phospha analogue. Such groups may be substituted in the aryl moiety by alkyl but are often unsubstituted.

Suitable A groups within Y and Z include optionally substituted alkyl, cycloalkyl (including polycycloalkyl), alkenyl, cycloalkenyl, aryl, aralkyl, alkyl disubstituted by arylene, alkenyl disubstituted by arylene and cycloalkylalkyl disubstituted by arylene.

Suitable Y and Z groups and A groups within Y and Z include those recited for monovalent $R^1$.

Suitable Y, Z and A alkyl groups include $C_{1-20}$ alkyl groups, such as $C_{1-8}$ alkyl groups. Suitable $C_{1-8}$ alkyl groups include favoured straight-chain $C_{1-4}$ alkyl groups, eg methyl and ethyl, and also favourably include branched $C_{4-8}$ alkyl groups, in particular those with a high degree of branching, eg optionally substituted (but often unsubstituted) neopentyl.

Suitable Y and Z alkoxy groups thus include $C_{1-4}$ alkoxy, in particular methoxy and ethoxy, eg ethoxy.

Suitable Y and Z optionally substituted cycloalkyl groups include $C_{4-7}$ cycloalkyl, thus including cyclohexyl, and polycycloalkyl, in particular adamantyl.

Suitable Y and Z optionally substituted cycloalkoxy groups thus include $C_{4-7}$ cycloalkoxy, thus including cyclohexyloxy, any of which may be $\alpha$-oxo or $\alpha,\omega$-dioxo substituted.

Within Y, Z and A aryl and aralkyl groups, favoured optionally substituted aryl groups include optionally substituted phenyl and 1-naphthyl.

Suitable substituents for such aryl groups include substituents inert in the desired polymerisation conditions provided the conjugate protic acid of such aryl groups has a $pK_a$ in DMSO<18. Such groups will be readily apparent to the skilled man, but include alkyl and aryl groups, and exclude carbonyl-containing ones. Such aryl groups are often unsubstituted.

Suitable Y and Z optionally substituted aryloxy groups thus include optionally substituted phenoxy, such as phenoxy.

Within Y, Z and A aralkyl groups, favoured alkyl groups include $C_{1-4}$ alkyl, in particular methyl.

Favoured Y and Z aralkyl groups thus include phenyl $C_{1-4}$ alkyl, in particular benzyl.

Such groups are optionally substituted in the phenyl ring, but are often unsubstituted. Suitable substituents include those listed above for Y and Z aryl groups.

Favoured Y and Z aralkoxy groups include phenyl-$C_{1-4}$ alkoxy, in particular benzyloxy, optionally substituted in the phenyl ring. Suitable substituents include those listed above for Y and Z aryl groups.

Catalysts of the present invention in which the initiator component a) has at least one group Y, Z or A which is optionally substituted aralkyl or cycloalkyl (especially polycycloalkyl) or optionally substituted branched alkyl may be used advantageously in the present acrylic bulk polymerisation systems, especially where any such group is bulkily substituted aralkyl, or adamantyl or neopentyl, and other such suitable Y and Z groups also include fluorenyl-9-oxy and indenyl-1-oxy.

The same advantages attach to initiator components where X is a suitable 1-aza analogue of the foregoing Y, Z or A groups.

When p is 2, favoured $Z_2$ groups include -$OSiR^5R^6OSiR^7R^8O$-L where $R^5$ to $R^8$ are the same and are optionally substituted benzyl (in particular unsubstituted benzyl), $C^{1-6}$ alkyl or optionally substituted phenyl. $R^5$ to $R^8$ are often unsubstituted.

The term 'polymer' herein in relation to the initiator components of the present catalysts and their compositions includes a reference to oligomers. The term in particular includes polymers of vinylic monomers.

Where Z is an organic polymer radical, or $Z_2$ is or comprises a polymer diradical, the polymer is preferably a particulate one insoluble in any desired polymerisation system (for example a highly crosslinked polymer with the $MX_mY_n$ moieties on its surface).

Preferably the polymer is a solid granulate of relatively high surface area, for example in the range 200 to 600 $m^2/gm$, favourably with a concentration of $MX_mY_nZ$ moieties of 1 per 3 to 30 square Angstrom.

M in each $MX_mY_nZ$ moiety may be linked lu to the polymer via a carbon atom on e.g. a pendent alkyl containing chain of the type described for Y and Z straight chain alkyl above.

The $M(Y_n)Z_p$ groups on the polymer will often all be identical.

Depending on the polymerisation medium in which the present catalyst is used, in particular where the initiator is to be insoluble, highly crosslinked alkylene, arylene, acrylic or styrene homo-or copolymers may be a appropriate for B polymer diradicals.

Favoured $Z_2$ groups also include -OBO- where B is an inorganic solid with a plurality of surface hydroxyl functions. Examples include silica or a metal hydroxide or hydrated oxide, e.g. alumina.

B may be inter alia a flat body of low specific surface area or (preferably) particulate with a relatively high specific surface area, for example in the range 200 to 600 $m^2/gm$.

Favourably, the -$OMX_mY_nO$-moieties are present on the surface at a concentration of 1 per 3 to 30 square Angstrom. This may be achieved by involving at least 20%, preferably at least 60%, of the available surface hydroxyl functions in -OBO-bonding to $M_mY_n$ moieties.

Favoured anions in the co-catalyst second catalyst component include azide, cyanide, cyanate, fluoride, bifluoride and aliphatic and aromatic mono-sulphonates, in particular fluoride, bifluoride and methanesulphonate ions.

Favoured cations therein, which render the catalyst available in the polymerisation medium, are often substituted -onium ions. These include quaternary ammonium and phosphonium, and tris(dialkylamino)-sulphonium, often substituted by relatively bulky organic-soluble groups eg $C_{3-6}$ alkyl, such as butyl, or $C_{5-8}$ cycloalkyl.

Alkali and alkali earth metal cations are less preferred but may be used if, in addition to the cations of the second catalyst component, the catalyst also includes a solubilisation aid, for example a crown ether, to complex the cations in the second component.

Typically the catalyst may comprise the first and second components in molar ratios in the range of 300:1 to 3:1 more often 100:1 to 8:1.

Where, for example, a crown ether is present this will of course be present in an appropriate molar ratio to the second component, for example in the range of 0.3:1 to 3:1.

A group of catalyst first (initiator) components for use in the process of the present invention consists of those of formula (II):

$MX(Y_q) Z^3r$     (II)

wherein

M is Si, Ge or Sn;

q and r are each an integer such that $(q + r) = 3$,

X and Y are as defined hereinbefore; and

$Z^3$ is a monovalent Z group as hereinbefore defined.

Suitable, favoured and preferred X, Y and $Z^2$ are as so described for relevant X, Y and Z hereinbefore.

Suitable, favoured and preferred groups X in formula (II) include respectively any of the groups $QR^1R^2$ composed of those variables Q, $R^1$ and $R^2$ or $(R^1 + R^2)$ correspondingly described as suitable, favoured or preferred hereinbefore.

Particular first components are those within formula (II) which are named in the Examples hereinafter.

When Q is N, $R^1$ and $R^2$ are favourably together optionally substituted hydrocarbadiyl, and favoured X include 9-carbazolyl, 1-imidazolyl, morpholino and oxazolid-2-on-3-yl.

In one preferred sub-group, such $(R^1 + R^2)$ are unsubstituted by hetero-atoms, and preferred X include 9-carbazolyl.

In a second preferred sub-group, such $(R^1 + R^2)$ are substituted by hetero-atoms other than nitrogen, and preferred X include morpholino.

In a third preferred sub-group, such $(R^1 + R^2)$ are unsubstituted by pendent monovalent substituents, and preferred X include 9-carbazolyl, 1-imidazolyl, morpholino and oxazolid-2-on-3-yl.

In a fourth preferred sub-group, such $(R^1 + R^2)$ have $\alpha$ and/or $\omega$ saturated carbon atoms substituted by oxo groups, and preferred X include oxazolid-2-on-3-yl.

Catalysts comprising a component a) of this preferred group of formula (II) are of particular interest for use in the bulk polymerisation process, of the present invention, especially in acrylic process systems of this type.

When, in a sub-group within formula (II), the or each $Z^3$ substituent is a polymer radical, this will typically be a polymer as described for B in formula (IV) below.

A second group of catalyst first (initiator) components consists of those of formula (III):

$MX(Y)Z^12$     (III)

wherein

M, X, and Y are as defined in formula (II); and

$Z^12$ is a group of the formula $-OSiR^5R^6OSiR^7R^8O-$ as defined in formula (I).

Suitable, favoured and preferred variables are as so described for corresponding variables hereinbefore.

A third group of first catalyst components consists of those of formula (IV):

$MX(Y)Z^22$     (IV)

wherein

M, X and Y are as defined in formula (II); and

$Z^22$ is a moiety -EBE- where E is a bond or O and B is a polymer diradical, or E is O and B is an inorganic solid on whose surface the two -O-groups are located, which comprises further -OMX(Y)O- moieties.

Suitable, favoured and preferred X and Y are as so described in formula (II).

Within the components of formula (IV) are four preferred sub-groups defined by X and its component groups and corresponding to those within formula (II).

B may be a an organic polymer diradical (including an oligomer, as hereinbefore defined).

The nature of B will depend on the polymerisation medium in which the catalyst is used, in particular where the initiator is to be insoluble.

Subject to the foregoing, B may appropriately be a highly cross-linked alkylene, arylene, acrylic or styrene homo- or co- polymer.

B is preferably a solid granulate of such a polymer with further M(X)Y moieties on the surface at a concentration of 1 per 3 to 30 $A^2$, and with a specific surface area of 200 to 600 m$^2$/gm.

B may also be an inorganic solid, such as silica or alumina, with the same favoured concentration of further M(X)Y moieties on the surface.

In the case of silica or alumina this concentration of M(X)Y moieties may be achieved by involving at least 20%, preferably at least 65%, of the available surface hydroxyl functions in -OBO- bonding.

All the initiator components may be used as such, or they may be formulated into compositions with other materials. Compositions of the initiator component of the catalysts of the present invention are of interest, in particular such compositions which are insoluble in the process medium.

Initiator components of formulae (II) and (III) and some of formula (IV) where B is an organic oligomer will tend to be soluble or dispersible in the desired polymerisation systems.

The use of insoluble compositions may be advantageous in particular where the initiator component is soluble or dispersible and it is desired to avoid such solution or dispersion. The initiator may then be formulated into an insoluble or non-dispersible composition eg with such conventional materials as a catalyst support.

The present process when catalysed by a catalyst comprising a composition of the present component a) forms a second aspect of the present invention.

Compositions comprising a component a) of formula (II) form a favoured group of such compositions.

Favoured and preferred compositions include those which comprise a component a) described as favoured or preferred hereinbefore.

The initiator component in such a composition is often one adhered to or embedded in the surface of a support (rather than chemically bonded to it as in the initiator components of formula (IV) hereinbefore.

The support may comprise eg a highly crosslinked polymer, in particular of vinylic monomers, such as an acrylic or styrene homo- or co-polymer, preferably a particulate one, adhering to the initiator component for the catalyst, and insoluble in any desired polymerisation system, or a similarly insoluble (particulate) inorganic solid.

Any co-catalyst component b) which in use of the catalyst is available in the polymerisation described herein is suitable for use with the present initiator compositions.

The co-catalyst components b) are known materials.

The initiator components a) are preparable analogously to, or are routinely derivable, from known materials. For example many of the groups X, Y and Z may be introduced to form the compounds of formula (I) by conventional nucleophilic displacement at the M nucleus.

Where the M nucleus is linked by two -O- groups to a solid or polymer diradical as hereinbefore defined, the links may be formed by conventional silylation of adjacent hydroxyl groups.

In all cases, such preparative procedures thus include and are exemplified by the synthesis of the present initiators illustrated by the following Descriptions.

Use of the present catalysts in the process of the present invention is illustrated by the following Examples:

Descriptions 1 and 2 - Preparation of Initiator Components a) of General Formula MXZ₃.

Description 1 - Preparation of 9-trimethylsilylcarbazole (E.1)

To a solution of carbazole (15g) in dry THF (200 ml) was added butyllithium (56 ml; 1.6M in hexane). Once the butyllithium addition was completed, the solution was heated to reflux for 1.5 hours and then allowed to cool. Chlorotrimethylsilane (12 ml) was added dropwise to the cooled mixture and then heated to reflux for 4 hours. Toluene (150 ml) was added to the cool mixture which was then filtered to remove LiC1. The filtrate was collected and the solvent removed under vacuum leaving a crude gray compound.

The crude product was further purified by vacuum distillation (0.03 mm Hg 184-186° C) to give a white compound (E.1) in an 84% yield.

It could be further purified by recrystallisation in hexane.

| n.m.r. (CDCl₃) ; | 0.7 | s | 9H SiMe3; |
| | 7.08-8.4 | broad | 8H aromatic-H. |

The following compounds were prepared analogously from the corresponding amine and chlorosilane:
9-triphenylsilylcarbazole     (E.2)
N-trimethylsilyl-N-phenyl-2-methyl-1-phenylprop-1-enylamine     (E.3)
N-trimethylsilylmorpholine     (E.4)

11

1-trimethylsilylimidazole (E.5)

3-trimethylsilyloxazolid-2-one (E.6)

The following compounds are prepared analogously from the corresponding amine and chlorosilane:

N-trimethylsilyl-N-methylacetamide (E.7)

N-triethylsilyl-N-ethylacetamide (E.8)

N-trimethylsilyl-N-cyclohex-1-enylmethylamine (E.9)

diphenyl(trimethylsilyl)amine (E.10)

dibenzyl(trimethylsilyl)amine (E.11)

N-trimethylsilylpyrrole (E.12)

1-N-trimethylsilylpyrrolidine (E.13)

N-trimethylsilylpiperidine (E.14)

N-triphenylsilylmorpholine (E.15)

N-methyl-N'-trimethylsilylpiperazine (E.16)

N-trimethylsilylindole (E.17)

9-tribenzylsilylcarbazole (E.18)

9-adamantyldimethylsilylcarbazole (E.19)

9-dimethylneopentylsilylcarbazole (E.20)

9-triethoxysilylcarbazole (E.21)

9-triphenoxysilylcarbazole (E.22)

9-tribenzyloxysilylcarbazole (E.23)

N-trimethylsilylindan-2-one (E.24)

N-trimethylsilylaniline (E.25)

N-trimethylsilylpiperidine-2-one (E.26)

N,N' bis(trimethylsilyl)piperazine-2-one (E.27)

N-triethylsilylaniline (E.28)

N-tripropylsilylaniline (E.29)


Description 2 - Preparation of Diphenyl(trimethyl-silyl)phosphine (E.30)

This was prepared analogously to (E.1) above from diphenylphosphine.

The following compounds are prepared analogously from the corresponding phosphine and chlorosilane:

9-trimethylsilyl-9-phosphafluorene (E.31)

benzoylphenyltrimethylsilylphosphine (E.32)

1-phospha-1-trimethylsilylcyclopentane (E.33)

diethyltrimethylsilylphosphine (E.34)

dibutyl trimethylsilylphosphonate (E.35)

dibenzyltrimethylsilylphosphine (E.36)

P-trimethylsilyl-P-phenyl-2-methyl-1-phenylpropenylphosphine (E.37)

benzylbenzoyltrimethylsilylphosphine (E.38)

1-phospha-1-trimethylsilylcyclohexane (E.39)

diethyltrimethylsilylphosphine (E.40)

dicyclohexyltrimethylsilylphosphonate (E.41)


Description 3 - Preparation of Initiator Components of General Formula MXY(EBE)

A suspension of fumed silica (Carbosil-SM) is lithiated analogously to Description 1, and the product is treated with an excess of 9-carbazolyldichloromethylsilane to give the desired product. Finely divided alumina may also be used.


Description 4 - Preparation of Initiator Components of a) General Formula MXY₂Z where Z is a Polymer Radical b) General Formula MXZ₃ where X is a Polymer Chain

a) Preparation of poly(9-carbazolyldimethylsilyloropyl methacrylate)

Analogously to Description 1, carbazole is N-lithiated, and the product treated with chloro(3-methacryloxy-propyl)dimethylsilane to give the title monomer (named within the brackets). The monomer is polymerised conventionally to give the desired product.

b) Preparation of Poly(N-trimethylsilyl-1-propylbutylene carboxamide

An amorphous nylon, poly(1-propylbutylenecarboxamide), is N-lithiated in THF solution at -70°C, and the product is treated with chlorotrimethylsilane to give the desired product.

Examples - Polymerisation using Catalysts comprising above Initiator Components - In situ generation of catalyst by combining initiator and co-catalyst.

The following Examples were Carried out as described hereinbefore in relation to the Schematic.

The following exemplified conditions are typical for the bulk polymerisation of methacrylic and/or acrylic ester and acrylic nitrile monomers.

The following tetrahydrofuran solutions of co-catalysts were prepared:

(C.1) Tetrabutylammonium fluoride trihydrate, pre-dried under high vacuum and over P$_2$O$_5$. made up into 0.1M solution;

(C.2) Anhydrous tetrabutylammonium fluoride (Aldrich), dried over CaH$_2$ overnight, made up into 1M solution;

(C.3) Tetrabutylammonium methanesulphonate, made up into 0.1M solution:

as was the following in toluene:

(C.4) Tetrabutylammonium fluoride - hexamethylacetylacetone complex, made up into 0.011M solution in toluene.

Examples 1 to 3 - Production of Poly(methyl methacrylate); Addition of Initiator and Co-catalyst to the Prepolymerisation Unit; Addition of Further Co-catalyst to the Polymerisation Extruder

The initiator used in these Examples was (E.1) as a 0.1M solution in methyl methacrylate monomer, purifed and dried as described hereinbefore, and the co-catalyst was (C.4).

Methyl methacrylate, also purified and dried as described hereinbefore was fed continuously into a tubular prepolymerisation unit of the type described hereinbefore.

The rate at which it is necessary to add initiator solution to the reaction mass to produce a product of a desired number average molecular weight was determined by routine trial. The initiator feed pump was set to supply initiator to the prepolymerisation unit input at that rate.

Similarly, the rate at which it is necessary to add co-catalyst solution to produce a satisfactory polymerisation conversion rate in the prepolymerisation product syrup was determined by routine trial.

The co-catalyst feed pump was set to supply co-catalyst to the prepolymerisation unit input at that rate.

Temperature indicators along the tube were used to give inferential polymer conversion percentages.

The product syrup was fed continuously through into the polymerisation extruder. At this stage further co-catalyst was introduced into the reaction mass to optimise the overall polymerisation conversion rate.

Again, the rate at which it is necessary to add co-catalyst solution to optimise the polymerisation conversion rate in the extruder was determined by routine trial, and the co-catalyst feed pump was set to supply co-catalyst to the extruder input at that rate.

The extruder screw speed was adjusted by routine trial to give minimum hold-up. The temperature of the extrudate was typically 150 to 160°C, and it typically contained 75 to 90 weight % polymer.

he process parameters and results are summarised below:

13

| Example 1 | |
| --- | --- |
| Feed rates | |
| a) to prepolymerisation unit: | |
| monomer | 160 ml/min |
| initiator | 14 ml/min |
| co-catalyst | 1 ml/min |
| b) to polymerisation extruder: | |
| co-catalyst | 10 ml/min |
| Extruder parameters: | |
| screw speed | 100 rpm |
| torque | 50% |
| initial temperature | 45°C |
| polymer production rate | 125 g/min |
| Product parameters: | |
| molecular weight $M_n$ | 54,000 |
| molecular weight distribution | 1.41 |

| Example 2 | |
| --- | --- |
| Feed rates | |
| a) to prepolymerisation unit: | |
| monomers | 200 ml/min |
| initiator | 14 ml/min |
| co-catalyst | 1 ml/min |
| b) to polymerisation extruder: | |
| co-catalyst | 10 ml/min |
| Extruder parameters: | |
| screw speed | 150 rpm |
| torque | 50% |
| initial temperature | 45°C |
| polymer production rate | 145 g/min |
| Product parameters: | |
| molecular weight $M_n$ | 44,000 |
| molecular weight distribution | 1.59 |

| Example 3 | |
|---|---|
| Feed rates | |
| a) to prepolymerisation unit: | |
| monomers<br>initiator<br>co-catalyst | 160 ml/min<br>7 ml/min<br>0.3 ml/min |
| b) to polymerisation extruder: | |
| co-catalyst | 10 ml/min |
| Extruder parameters: | |
| screw speed<br>torque<br>initial temperature<br>polymer production rate | 75 rpm<br>90%<br>65 °C<br>120 g/min |
| Product parameters: | |
| molecular weight $M_n$<br>molecular weight distribution | 83,200<br>2.31 |

Initiators (E.3) to (E.41) and co-catalysts (C.1) to (C.3) may also be used analogously with similar results.

## Examples 4 to 6 - Production of Poly(methyl methacrylate); Addition of Initiator and Co-catalyst to the Polymerisation Extruder only

Methyl methacrylate monomer, purifed and dried as described hereinbefore was fed continuously into an extruder of the type described hereinbefore. The rate at which it is necessary to add initiator solution to the reaction mass to produce a product of a desired number average molecular weight was determined by routine trial, and the initiator feed pump was set to supply initiator to the extruder input at that rate.

Similarly, the rate at which it is necessary to add co-catalyst solution to produce a satisfactory polymerisation conversion rate in the polymerisation product was determined by routine trial, and the co-catalyst feed pump was set to supply co-catalyst to the extruder input at that rate.

The extruder screw speed was adjusted by routine trial to give minimum hold-up. The temperature of the extrudate was typically 150 to 160 °C and it typically contained 75 to 90 weight % polymer.

The co-catalyst was (C.4); the initiator. process parameters and results are summarised below:

15

| Example 4 | |
|---|---|
| Feed rates | |
| monomer | 110 ml/min |
| initiator (E.6) | 14 ml/min |
| co-catalyst | 19 ml/min |
| Extruder parameters: | |
| screw speed | 75 rpm |
| torque | 60% |
| initial temperature | 66 °C |
| polymer production rate | 55 g/min |
| Product parameters: | |
| molecular weight $M_n$ | 141,300 |
| molecular weight distribution | 2.29 |

| Example 5 | |
|---|---|
| Feed rates | |
| monomer | 160 ml/min |
| initiator (E.5) | 15 ml/min |
| co-catalyst | 30 ml/min |
| Extruder parameters: | |
| screw speed | 80 rpm |
| torque | 35% |
| initial temperature | 64 °C |
| polymer production rate | 70 g/min |
| Product parameters: | |
| molecular weight $M_n$ | 60,300 |
| molecular weight distribution | 2.4 |

| Example 6 | |
|---|---|
| Feed rates | |
| monomer | 160 ml/min |
| initiator (E.30) | 14 ml/min |
| co-catalyst | 12 ml/min |
| Extruder parameters: | |
| screw speed | 120 rpm |
| torque | 50% |
| initial temperature | 80 °C |
| polymer production rate | 80 g/min |
| Product parameters: | |
| molecular weight $M_n$ | 50,100 |
| molecular weight distribution | 2.08 |

Initiators (E.3) to (E.41) and co-catalysts (C.1) to (C.3) may also be used analogously with similar results.

Example 7 - Production of Methyl Methacrylate - Butyl Methacrylate 50:50 Copolymer; Addition of Initiator and Co-catalyst to the Prepolymerisation Unit; Addition of Further Co-catalyst to the Polymerisation Extruder

Methyl methacrylate and butyl methacrylate monomers (50:50 w/w mixture), purifed and dried as described hereinbefore were fed continuously into an extruder of the type described hereinbefore and copolymerised essentially as described in Examples 1 to 3, with the following process parameters and results:

| Feed rates | |
|---|---|
| a) to prepolymerisation unit: | |
| monomers<br>initiator<br>co-catalyst | 160 ml/min<br>14 ml/min<br>0.6 ml/min |
| b) to polymerisation extruder: | |
| co-catalyst | 20 ml/min |
| Extruder parameters: | |
| screw speed<br>torque<br>initial temperature<br>polymer production rate | 75 rpm<br>60%<br>45° C<br>130 g/min |
| Product parameters: | |
| molecular weight $M_n$<br>molecular weight distribution | 70,800<br>1.81 |

Initiators (E.3) to (E.41) and co-catalysts (C.1) to (C.3) may also be used analogously with similar results.

Optionally complexed fluoride is a preferred anion in co-catalyst component b) in all the foregoing Examples. However, azide, cyanide, cyanate, fluoride, bifluoride, and other aliphatic and aromatic mono-sulphonates are used analogously with similar results. Any cation which in use of the catalyst is inert may be used in place of the tetrabutylammonium (TBA) cation, provided that it renders the co-catalyst as soluble in the reaction mixture as the TBA salt.

**Claims**

1. A process for the bulk addition polymerisation of acrylic monomer species to give a polymer, which process is carried out at least in part in an extruder and is catalysed by a catalyst comprising two components:

(a) an (initiator) first component of formula (I):

$M(X_m)(Y_n)Z_p$     (I)

wherein

M is Si, Ge or Sn

m and p are each an integer and n is 0 or an integer such that $(m + n + p) = 4$;

X is $QR^1R2^2$ where Q is N, P, As or $P(=T)G.D$

where T is O or S and G and D are each independently a bond, O or S and $R^1$ and $R^2$ are each independently optionally substituted hydrocarbyl or together are optionally substituted hydrocarbadiyl which are inert in the process conditions of the present invention, or, when Q is $P(=T)G.D$ as

17

hereinbefore defined, $R^1$ and $R^2$ are each independently $M(Y_n)Z_p$ as hereinbefore defined.

Y is independently any group as defined for X, or any group selected from a group OA where A is optionally substituted hydrocarbyl inert in the process conditions of the present invention, or trialkylsilylalkyl;

Z is independently any group as defined for Y, or an organic polymer radical comprising further $M(Y_n)Z_p$ moieties; or

p is 2 and

$Z_2$ is a group $Z^1_2$ of the formula $OSiR^5R^6OSiR^7R^8O$-where $R^5$, $R^6$, $R^7$ and $R^8$ are each independently selected from any of the values defined for $R^1$ or $R^2$, or

$Z_2$ is a group $Z^2_2$ which is a moiety -EBE- where E is a bond or O and B is a polymer diradical, or E is O and B is an inorganic solid on whose surface the two -O- groups are located, which comprises further $-OMX_mY_nO-$moieties; and

(b) a (co-catalyst) second component salt comprising an anion selected from azide, cyanide, cyanate, fluoride, bifluoride, nitrate and optionally substituted organic mono- and poly-phosphonates, -phosphinates -sulphonates, -sulphinates. -carboxylates, -siloxides and -oxides; and

a cation which in use of the catalyst is inert under the polymerisation process conditions yet renders the co-catalyst available in the polymerising medium.

2. A process according to claim 1, characterised in that the initiator, co-catalyst and monomer to be polymersised are fed into a prepolymerisation unit, and the output product and further co-catalyst is then fed into the extruder.

3. A process according to claim 1, characterised in that a significant phase of the process is at 100 to 180 °C in substantially adiabatic conditions.

4. A process according to claim 3, characterised in that the process medium is essentially a solution of product polymer in reacting monomer or monomer mixture, characterised in that the mixture achieves, and continues to polymerise at, temperatures above 150 °C.

5. A process according to claim 1, characterised in that the initiator component a) is of formula (II):

$MX(Y_q) Z^2r$ (II)

and $Z^2$ is a monovalent Z group as defined in claim 1.

6. A process according to claim 2, characterised in that X is diphenylphosphino, 9-carbazolyl, 1-imidazolyl, N-phenyl-2-methyl -1-phenylprop-1-enylamino, morpholino or oxazolid-2-on-3yl, and $Z^2$ is methyl or phenyl.

7. A process according to claim 1, characterised in that the anion of the co-catalyst component b) comprises fluoride or bifluoride.

8. A process according to claim 1, characterised by the use of a composition comprising an initiator component a) as defined in claim 1.

9. A process according to claim 1, characterised in that each monomer is a methacrylate monomer.

10. A process according to claim 9, characterised in that each acrylic monomer is selected from methyl methacrylate, lauryl methacrylate, 2-ethylhexyl methacrylate, tricyclo[5,2,10$^{2,6}$] dec-3-en-8-yl methacrylate, butyl acrylate and acrylonitrile.